# EUROPÄISCHE PATENTSCHRIFT

(11) **EP 1 248 714 B1**
(45) Veröffentlichungstag und Bekanntmachung des Hinweises auf die Patenterteilung: **21.07.2004**
(21) Anmeldenummer: 00991056.3
(22) Anmeldetag: 12.12.2000
(51) Int. Cl.: B60R 21/01

(54) **SYSTEM ZUM STEUERN DES BETRIEBS VON MODULEN MITTELS VON EINEM STEUERGERÄT ÜBER EINEN DATENBUS ERFOLGENDER INFORMATIONSÜBERTRAGUNG SOWIE ZÜNDGERÄT UND PRÜFSCHALTUNG**
SYSTEM FOR CONTROLLING THE OPERATION OF MODULES USING INFORMATION TRANSMITTED FROM A CONTROL DEVICE VIA A DATA BUS, A TRIGGER DEVICE AND A TEST CIRCUIT
SYSTEME POUR COMMANDER LE FONCTIONNEMENT DE MODULES AU MOYEN D'UNE TRANSMISSION D'INFORMATIONS EFFECTUEE PAR UN APPAREIL DE COMMANDE PAR L'INTERMEDIAIRE D'UN BUS DE DONNEES, APPAREIL D'AMORCAGE ET CIRCUIT DE CONTROLE

(30) Priorität: 14.12.1999 DE 19960261
(43) Veröffentlichungstag der Anmeldung: 16.10.2002
(73) Patentinhaber: SIEMENS AKTIENGESELLSCHAFT, 80333 München (DE)
(72) Erfinder: SCHMIDT, Claus, 93053 Regensburg (DE)
(86) Internationale Anmeldenummer: PCT/DE2000/004410
(87) Internationale Veröffentlichungsnummer: WO 2001/045321

(56) Entgegenhaltungen:
- DE-A- 19 739 808
- DE-A- 19 740 021
- DE-C- 19 609 076
- US-A- 5 964 816

## Beschreibung

Die Erfindung betrifft ein System zum Steuern des Betriebs von Modulen mittels von einem Steuergerät über einen Datenbus erfolgender Informationsübertragung, insbesondere zum Steuern des Betriebs von Zündgeräten einer Insassenschutzvorrichtung in einem Kraftfahrzeug, gemäß dem Oberbegriff des Anspruchs 1. Die Erfindung betrifft weiter ein Zündgerät zum Anschluß an den Kommunikationsbus eines solchen Systems.

Ein gattungsgemäßes System ist aus der DE 197 39 808 A1 bekannt. Bei diesem System enthalten die vom Steuergerät zu der Kommunikationsschnittstelle gesendeten Codewörter einen Informationsabschnitt und einen Fehlererkennungsabschnitt, der beispielsweise die Summe von Bits des Informationsabschnitts enthält. Im Informationspaket ist ein Bit enthalten, das dem Vorhandensein oder Nichtvorhandensein eines von einem Safing-Schalter bzw. -Sensor erzeugten Safing-Signals entspricht. Wenn das vom Steuergerät gesendete Codewort Zündgeräte eines Kraftfahrzeuginsassen-Schutzsystems zünden soll, enthält es an einer vorbestimmten Stelle des Informationspakets ein Bit, das dem Vorhandensein des Safing-Signals entspricht, d.h. voraussetzt, daß der Safing-Schalter geschlossen ist. Dieses Informations-Bit wird in der Kommunikationsschnittstelle durch die Information über das am Safing-Eingang tatsächlich anliegende Safing-Signal ersetzt, so daß beispielsweise bei in dem Codewort enthaltener Information über den geschlossenen Safing-Schalter, jedoch bei Fehlen des Safing-Signals am Safing-Eingang der Kommunikationsschnittstelle der Summenwert im Codewort nicht mehr mit der Summe des Informationspakets übereinstimmt und das Codewort als fehlerhaft erkannt werden kann, wodurch die Zündgeräte nicht auslösen.

Bei dem bekannten System ermöglicht das am Safing-Eingang liegende Safing-Signal somit die Integration einer Safing-Funktion in mit Bussystemen arbeitenden Airbag-Zündsystemen. Bei offenem Safing-Schalter wird eine Zündung mit Sicherheit verhindert. Bei dem bekannten System kann jedoch nicht zwischen Zündbefehlen für unterschiedliche Zündgeräte, beispielsweise Zündgeräte für Seiten-Airbags und Front-Airbags, unterschieden werden. Des weiteren können alle Zündgeräte nur dann gezündet werden, wenn der Safing-Schalter geschlossen ist.

Der Erfindung liegt die Aufgabe zugrunde, ein gattungsgemäßes System derart weiterzubilden, daß weitgehende Flexibilität und Sicherheit bezüglich der Ansteuerbarkeit der einzelnen Module gegeben ist.

Eine erste Lösung dieser Aufgabe wird mit einem System gemäß dem Anspruch 1 geschaffen.

Dadurch, daß bei dem erfindungsgemäßen System an der steuergeräteseitigen Kommunikationsschnittstelle mehrere Eingänge vorhanden sind, deren Signalbelegung zu entsprechenden Ausgängen der modulseitigen Kommunikationsschnittstelle übertragen wird, stehen modulseitig Informationen zur Verfügung, die in unterschiedlichster Weise zur Freigabe und Sperrung von Funktionen verwendbar sind, die mittels der von dem Steuermodul gesendeten Daten ausgelöst werden sollen. Damit ist eine flexible Ansteuerung der einzelnen Module möglich. Die Übertragung der gesendeten Daten und der Informationen in den Codewörtern kann in ähnlicher Weise gesichert werden wie bei dem Verfahren gemäß der eingangs genannten DE 197 39 808, wobei durch in den Codewörtern enthaltene Check-Bits zur Überprüfung der Richtigkeit der Informationen sowohl die Übertragungssicherheit erhöht wird als auch Fehler des Steuergerätes erkannt werden können. Die Anzahl der mit Signalen belegbaren Eingänge der Steuergeräte-seitigen Kommunikationsschnittstelle kann verschieden von der Anzahl der modulseitigen Kommunikationsschnittstelle sein.

Mit den Merkmalen des Anspruchs 2 können Funktionen der Module in Abhängigkeit vom Schalterstand des Safing-Schalters freigegeben werden.

Vorteilhafterweise sind gemäß dem Anspruch 3 die Module über modulspezifische Codes gezielt ansprechbar, wodurch die Flexibilität und Sicherheit ihrer Ansteuerbarkeit weiter erhöht wird.

Eine weitere Lösung der Erfindungsaufgabe, die mit der erstgenannten Lösung kombiniert werden kann, wird mit einem System gemäß dem Anspruch 4 erreicht.

Mit der Ausbildung des Systems gemäß dem Anspruch 4 ist es möglich, einen Signalzustand herzustellen, der einerseits dem geschlossenen Safing-Schalter entspricht, wodurch bestimmte Funktionen freigegeben werden, und der andererseits dem über ein Testsignal geschlossenen Safing-Schalter und zusätzlich dem Vorliegen eines Testsignals entspricht, wodurch Funktionen, insbesondere Testfunktionen, erfolgen können, bei denen ein oder mehrere Module sich im gleichen Freigabezustand wie bei geschlossenem Safing-Schalter befinden.

Der gemäß dem Anspruch 5 zusätzlich gesondert vorhandene Testausgang der modulseitigen Kommunikationsschnittstelle ermöglicht eine gezielte Ausführung von Funktionsumfängen, unabhängig vom Zustand weiterer vorhandener Ausgänge.

Mit den Merkmalen des Anspruchs 6 wird eine praxisgerechte Auslösung der einzelnen Sicherheitseinrichtungen eines Insassenschutzsystems eines Kraftfahrzeugs erzielt.

Mit den Merkmalen des Anspruchs 7 wird eine weitgehende Sicherheit des Auslösens der bei einem Frontalaufprall auszulösenden Sicherheitseinrichtungen gegenüber Fehlfunktionen des Steuergerätes erzielt. Zusätzlich können, wie weiter unten erläutert werden wird, die bei einem Frontalaufprall auszulösenden Sicherheitseinrichtungen überprüft werden.

Die Ansprüche 8 und 9 sind auf eine Ausführungsform des Systems gerichtet, bei dem kein gesonderter Prüfeingang der steuergeräteseitigen Kommunikationsschnittstelle vorgesehen ist.

Mit dem Merkmal des Anspruchs 10 lassen sich zusätzliche Funktionssicherheitsvorteile erzielen, indem beispielsweise im Steuergerät ein Zündsignal nur dann erzeugt wird, wenn der Safing-Eingang einen Pegelwechsel gesehen hat.

Der Anspruch 11 ist auf den grundsätzlichen Aufbau einer ersten vorteilhaften Ausführungsform eines Zündgerätes zum Anschluß an den Kommunikationsbus des erfindungsgemäßen Systems gerichtet. Mit der erfindungsgemäßen Ausbildung des Zündgerätes wird erreicht, daß mehrere als sog. "smart squibbs" ausgebildete, gleiche Zündgeräte an den Kommunikationsbus angeschlossen und gezielt ausgelöst werden konnen.

Der Anspruch 12 kennzeichnet eine weitere Ausführungsform eines Zündgerätes, mit dessen Sicherheitsschaltung es möglich ist, eine Funktionsüberprüfung durchzuführen, solange die Zündspannungsquelle noch nicht auf ihre Zündspannung aufgeladen ist. Wenn gleichzeitig mit einem Steuersignal ein Testsignal vorliegt, wird eine Zündung des Zündgerätes verhindert.

Die Merkmale der Ansprüche 11 und 12 können gemeinsam vorhanden sein.

Gemäß dem Anspruch 13 wird der Sicherheitsschalter, der ein zentrales Sicherheitselement des Systems darstellt, vorteilhafterweise überwacht.

Die Erfindung ist für alle gattungsgemäßen Systeme geeignet, bei denen Slave-Module von einem Master-Modul aus über einen Datenbus möglichst flexibel und mit hoher Funktionssicherheit gesteuert werden sollen. Besonders gut eignet sich die Erfindung zur Verwendung in Fahrzeuginsassen-Schutzsystemen, anhand derer sie im Folgenden beispielsweise und mit weiteren Einzelheiten weiter erläutert wird.

Es stellen dar:
- Fig. 1: ein Blockschaltbild einer ersten Ausführungsform des erfindungsgemäßen Systems,
- Fig. 2: ein Blockschaltbild eines Zündgerätes,
- Fig. 3: ein Schaltbild zur Funktionserläuterung des Zündgerätes gemäß Fig. 2 und
- Fig. 4: ein Blockschaltbild einer zweiten Ausführungsform des Systems.

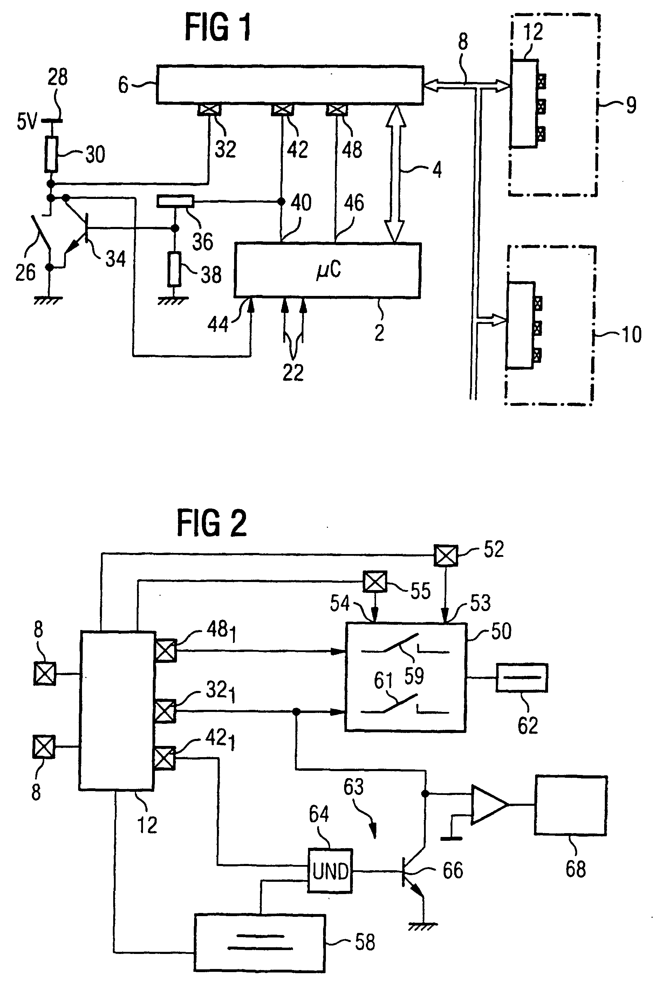

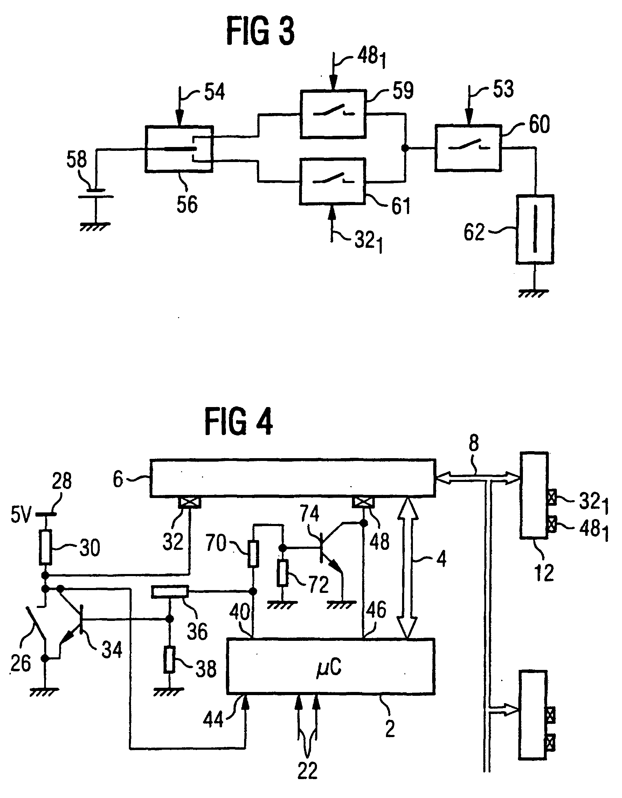

Gemäß Fig. 1 ist ein Steuergerät 2 eines Fahrzeuginsassen-Schutzsystems über eine Datenleitung 4 mit einer Kommunikationsschnittstelle 6 verbunden, die über einen Kommunikationsbus 8 mit Zündgeräten 9, 10 verbunden ist. Die Zündgeräte sind als sog. "smart squibbs" ausgebildet, die eine eigene Kommunikationsschnittstelle 12 aufweisen und deren Aufbau anhand der Fig. 2 und 3 erläutert wird. Das System weist mehrere Zündgeräte auf, die selektiv einzeln oder in Gruppen bei einem Frontalaufprall, einem Seitenaufprall, einem Roll-Over usw. gezündet werden sollen.

Das Steuergerät 2 enthält einen Mikroprozessor mit zugehörigen Speichern, der aus Sensoreingangssignalen 22, die von unterschiedlichem Beschleunigungssensoren erzeugt werden, Befehle bzw. Informationen bestimmt, die über die Datenleitung 4 der Kommunikationsschnittstelle 6 zugeführt werden.

Weiter ist ein einen Redundanzschalter bildender Safing-Schalter 26 vorgesehen, der über einer vorbestimmten Fahrzeugverzögerung schließt, so daß bei geschlossenem Safing-Schalter 26 von einer Spannungsquelle 28 mit beispielsweise 5 Volt durch einen Widerstand 30 und dem Safing-Schalter 26 Strom fließt, so daß an einem Safing-Pin bzw. Safing-Eingang 32 der Kommunikationsschnittstelle 6, der mit der Verbindung zwischen dem Safing-Schalter 26 und dem Widerstand 30 verbunden ist, ein Safing-Signal liegt. Parallel zum Safing-Schalter 26 liegt ein normalerweise offener, beispielsweise durch einen Transistor gebildeter Bypaß-Schalter 34, der an eine aus zwei in Reihe liegenden Widerständen 36 und 38 gebildete Spannungsteilerschaltung angeschlossen ist. Der eine Widerstand 38 ist mit Masse verbunden und der andere Widerstand 36 ist mit einem Testausgang 40 des Steuergerätes 2 verbunden, der wiederum mit einem Testeingang 42 der Kommunikationsschnittstelle 6 verbunden ist.

Die Verbindung zwischen dem Safing-Schalter 26 und dem Widerstand 30 ist zusätzlich mit einem Eingang 44 des Steuergerätes 2 verbunden.

Das Steuergerät 2 weist weiter einen Steuerausgang 46 auf, der mit einem weiteren Pin bzw. einem Steuereingang 48 der Kommunikationsschnittstelle 6 verbunden ist.

Aufbau und Funktion der einzelnen geschilderten Bauelemente und Funktionsblöcke sind an sich bekannt und werden nicht erläutert.

Die Informationsübertragung der über die Datenleitung 4 geschickten Befehle des Steuergerätes 2 und der Signalzustände der Eingänge 32, 42 und 48 geschieht in an sich bekannter Weise, wobei diese Daten mittels der Gliederung der einzelnen Codeworte in Informationspakete und Check-Pakete in an sich bekannter Weise auf Richtigkeit überprüft werden können. Wenn in der Kommunikationsschnittstelle 6 beispielsweise festgestellt wird, daß der Eingang 42 mit einem Signal belegt ist, dies beim Eingang 32 aber nicht der Fall ist, so kann ein Fehler im System durch Rückmeldung über die Datenleitung 4 an das Steuergerät 2 sofort identifiziert werden. Des weiteren kann das Steuergerät 2 beispielsweise so ausgebildet sein, daß es einen Zündbefehl zum Zünden des oder der Zündgeräte 18 nur schickt, wenn an seinem Eingang 44 ein Safing-Signal liegt. Des weiteren kann das Senden eines Zündbefehls zusätzlich dadurch gesichert sein, daß ein Zündimpuls nur gesendet wird, nachdem am Eingang 44 oder am Eingang 32 ein Signalwechsel erkannt wurde, ohne daß am Eingang 42 ein Signalwechsel vorliegt.

Wenn beispielsweise bei infolge eines Fehlers im Steuergerät 2 erzeugtem Testsignal, d.h. mit Signal beaufschlagtem Testeingang 42, über die Datenleitung 4 ein Zündsignal gesendet wird, führt dieses nicht zum Zünden eines Zündgerätes, wie im Folgenden erläutert werden wird, da der Testeingang 42 einen DISABLE-Eingang bildet. Somit kann zumindest weitgehend verhindert werden, daß Fehler im Zündgerät 2 zu einer versehentlichen Zündung eines Zündgerätes führen.

Im Folgenden wird anhand Fig. 2 der Aufbau eines vorteilhaften Ausführungsbeispiels der vorteilhafterweise gleich ausgebildeten Zündgeräte 9, 10 beschrieben.

Die mit dem Kommunikationsbus 8 verbundene Kommunikationsschnittstelle 12 weist einen Safing-Ausgang 32₁, einen Testausgang 42₁ und einen Steuerausgang 48₁ auf. Von der Kommunikationsschnittstelle 12 werden die über den Kommunikationsbus 8 übertragenen Codewörter jeweils derart ausgelesen, daß der Signalzustand an den Ausgängen 32₁, 42₁ und 48₁ den Signalzuständen an den Eingängen 32, 42, 48 der Kommunikationsschnittstelle 6 entspricht.

In dem Zündgerät 16 befindet sich eine Schalteinrichtung 50, deren Eingänge mit den Ausgängen 32₁ und 48₁ verbunden sind. Ein Zündsignalausgang 52 der Kommunikationsschnittstelle 12, an den ein vom Steuergerät 2 über die Datenleitung 4 gesandtes Zündsignal übertragen wird, ist mit einem Zündeingang 53 verbunden. Ein Codeeingang 54 ist mit einem Codesignalausgang 55 verbunden, der dem Zündgeräten individuell zugeordnete, von dem Steuergerät 2 gesandte Kennungs- bzw. Codesignale führt.

Die Zündgeräte sind jeweils mit einem individuellen Code, beispielsweise durch Programmierung eines in ihnen enthaltenen Speichers, versehen, so daß sie ein jeweils ihnen zugeordnetes Codesignal erkennen.

Die Codierung eines Zündgerätes kann auch dadurch erfolgen, daß dem Codeeingang 54 ein Widerstand nachgeschaltet ist, an dem bei Vorliegen des Codesignals eine vorbestimmte Spannung abfällt, die zum Betätigen eines Codeschalters dient. Das Vorhandensein bzw. Intaktsein eines solchen Widerstandes kann vom Steuergerät 2 her überprüft werden, wodurch die Funktionssicherheit des Systems weiter verbessert wird.

Der weitere Aufbau und die Funktion der Schalteinrichtung 50 wird anhand der Fig. 3 erläutert:

Der Eingang eines Codeschalters 56 ist mit einer Zündspannungsquelle 58 verbunden. Der Codeschalter 56 weist zwei Ausgänge auf, von denen einer über einen vom Steuerausgang 48₁ ansteuerbaren Steuerschalter 59 mit dem Eingang eines Zündschalters 60 und der andere über einen vom Safing-Ausgang 32₁ her ansteuerbaren Safing-Schalter 61 mit dem Eingang des Zündschalters 60 verbunden ist. Der Ausgang des Zündschalters 60 ist mit einer beispielsweise als Zündpille ausgebildeten Zündeinheit 62 verbunden.

Die Funktion der beschriebenen Schalteinrichtung 50 ist derart, daß das am Eingang 54 liegende Codesignal die Steuergeräte-spezifische Stellung des Codeschalters 56 festlegt, d.h. ob der Zweig mit dem Steuerschalter 59 oder der Zweig mit dem Safing-Schalter 61 aktiviert ist. Bei aktiviertem Steuerschalter 59 führt ein am Steuerausgang 48₁ liegendes Steuersignal zum Schließen des Steuerschalters 59, so daß ein den Zündschalter 60 schließendes Zündsignal 53 bei aufgeladener Zündspannungsquelle 58 die Zündeinheit 62 zündet. Bei aktiviertem Safing-Schalter 61 dagegen führt ein Signal am Safing-Ausgang 32₁ dazu, daß die Zundeinheit 62 bei einem Zündsignal zündet.

Wenn an den Kommunikationsbus 8 eine Mehrzahl von mit der beschriebenen Steuerschaltung 50 ausgerüsteten Zündgeräten angeschlossen ist, läßt sich somit über das Codesignal bestimmen, ob die Zündgeräte über den Steuerausgang 48₁ und/oder den Safing-Ausgang 32₁ aktiviert werden, so daß sie entsprechend zünden.

Eine beispielhafte Zuordnung ist, daß Zündgeräte, die über den Steuerausgang 48₁ aktiviert werden, Zündgeräte sind, die bei einem Seitenaufprall zünden, wohingegen Zündgeräte, die bei einem Frontalaufprall zünden sollen, über den Safing-Ausgang 32₁ aktiviert werden. Die Schalter 59 und 61 stellen somit in gewisser Weise Safing-Schalter dar, die einem Seitenaufprall bzw. einem Frontalaufprall zugeordnet sind.

Weiter enthält das Zündgerät eine Sicherheitsschalteinrichtung 63 mit einem UND-Glied 64, dessen Eingänge mit der Zündspannungsquelle 58 und dem Testausgang 42₁ verbunden sind und dessen Ausgang mit dem Eingang eines beispielsweise aus einem Transistor gebildeten Sicherheitsschalters 66 verbunden ist. Der Sicherheitsschalter 66 legt den Safing-Ausgang 32₁ bei einem Signal vom UND-Glied 64 her auf Masse, so daß ein am Safing-Ausgang 32₁ vorhandenes Signal für die Schalteinrichtung 50 unwirksam wird. Zur Überwachung des Zustandes des Sicherheitsschalters 66 bzw. des Safing-Ausgangs 32₁ ist eine Überwachungseinrichtung 68 vorgesehen, deren Ausgangssignal unmittelbar angezeigt wird und/oder vom Steuergerät 2 zusätzlich erfaßt werden kann.

Aufbau und Funktion der einzelnen Baugruppen bzw. Funktionselemente sind an sich bekannt und werden daher nicht im einzelnen erläutert.

Im Folgenden wird die Funktion der Sicherheitseinrichtung 63 erläutert. Dabei wird angenommen, daß die Zündspannungsquelle 58 nach Einschalten des Systems beispielsweise über den Kommunikationsbus 8 allmählich auf die Zündspannung aufgeladen wird.

Der Safing-Ausgang 32₁ sei mit einem Safing-Signal (Frontalaufprall) belegt, so daß bei entsprechendem Code der Schalter 61 geschlossen ist und die Zündeinheit 62 bei einem Zündsignal zündet, sofern der Testausgang 42₁ nicht mit einem Signal beaufschlagt ist. Ist jedoch ein Testsignal vorhanden und die Zündspannungsquelle 58 auf ihre Zündspannung geladen, so liefert das UND-Glied 64 ein Ausgangssignal, wodurch der Sicherheitsschalter 66 schließt und den Safing-Ausgang 32₁ mit Masse verbindet, wodurch wiederum ein Schließen des Schalters 60 ausgeschlossen ist. Ein Testsignal stellt somit ein ENABLE-Signal bezüglich der Zündung dar. Wenn die Zündspannungsquelle 58 nach einem Inbetriebsetzen der Anlage noch nicht die Zündspannung erreicht hat (die Zündspannungsquelle 58 enthält einen Ladekondensator), so liefert das UND-Glied 64 kein Ausgangssignal, da in diesem Zustand Ungleichheit zwischen der Spannung am Prüfausgang 42₁ und der Spannung der Zündspannungsquelle 58 gegeben ist. Ein Zünden des Zündgerätes 18 ist mit unzureichender Spannung ohnehin nicht möglich. Mit Hilfe eines vom Steuergerät erzeugten Zünd- bzw. Prüfimpulses kann die Zündeinheit 68 jedoch getestet werden, da die Schalter 56, 61 und 60 einen Strompfad von der Spannungsquelle 58 zur Zündeinheit 62 herstellen.
Wenn eine Mehrzahl von Zündgeräten gemäß Fig. 2 an den Kommunikationsbus 8 der Fig. 1 angeschlossen sind, läßt sich somit ein Insassenschutzsystem verwirklichen, bei dem einige Zündgeräte (geschlossener Schalter 61) nur bei einem Frontalaufprall (Safing-Ausgang 32₁) zünden und andere Zündgeräte (Schalter 59 geschlossen) bei anderen als Frontalaufprällen zünden, wobei deren Zündung über den Steuerausgang 48₁ abgesichert ist. Die bei einem Frontalaufprall zundenden Zündgeräte lassen sich zusätzlich mit Hilfe des Testausgangs 32₁ hinsichtlich ihrer Funktion überprüfen, wobei bei einer Funktionsüberprüfung ein Zünden sicher ausgeschlossen ist.

Es versteht sich, daß das beschriebene System in unterschiedlichster Weise abgeändert werden kann. Beispielsweise ist die Integration einer Zündgeräte-spezifischen Kennung nicht zwingend erforderlich; sie vergrößert jedoch die Flexibilität des Systems, da Zündgeräte gezielt angesprochen werden können. In der Schalteinrichtung 50 können mehrere Schalter enthalten sein, so daß es beispielsweise möglich ist, bei einem Frontalaufprall alle Zündgeräte zu zünden, wohingegen bei anderen Aufprallen nur jeweils zugeordnete Zündgeräte gezündet werden.

Alternativ können auch andere Zündgeräte eingesetzt werden, die an eine gemeinsame Kommunikationsschnittstelle 12 angeschlossen sind.

Der Zündeingang 53 kann entfallen, wenn das Zündsignal unmittelbar über den Ausgang 48₁ bzw. 32₁ kommt und entsprechende Schalter schließt, die die Zündspannungsquelle mit der Zündeinheit verbunden.

Es versteht sich, daß auch das Blockschaltbild der Fig. 2 schematisch ist und in vielfältiger Hinsicht abgeändert werden kann. Beispielsweise können mehrere Zündeinheiten je Zündgerät vorgesehen sein.
Fig. 4 stellt eine abgeänderte Ausführungsform des Systems gemäß Fig. 1 dar, wobei für funktionsähnliche Teile die gleichen Bezugszeichen verwendet sind.

Der wesentliche Unterschied zu der Ausführungsform gemäß Fig. 3 und der der Fig. 1 liegt darin, daß bei der Ausführungsform gemäß Fig. 3 der Testeingang 42 fehlt und anstelle dessen der Testausgang 40 über eine weitere Spannungsteilerschaltung mit Widerständen 70 und 72 mit einem, beispielsweise durch einen Transistor gebildeten, elektronisch ansteuerbaren Schalter 74 verbunden ist, der mit dem Steuereingang 48 verbunden ist.

Mit der Schaltung wird erreicht, daß bei Vorliegen eines von dem Steuergerät 2 erzeugten Testimpulses am Testausgang 40 bzw. einem Impuls am Ausgang 40 (der nicht zwingend ein Prüfausgang sein muß) zum Schließen der Schalter 34 und 74 an den Eingängen 32 und 48 jeweils die gleichen Spannungen bzw. Signale vorliegen wie beim Schließen des Safing-Schalters 26 bzw. beim Vorhandensein eines Steuersignals am Steuerausgang 46.

Mit lediglich zwei Pins bzw. Eingängen 32 und 48 der Kommunikationsschnittstelle 6, denen entsprechende Ausgänge 32₁ und 48₁ der Decodiereinrichtung 10 entsprechen, können beispielsweise gemäß nachfolgender Tabelle vier Funktionsumfänge gesichert werden:

| Zustand | Safing-Eingang 32 | Steuereingang 48 | Freigabe/Sperre |
|---|---|---|---|
| I | 0 | 0 | Freigabe Test Zündung bei Frontalaufprall |
| II | 0 | 1 | Freigabe Zündung bei Nicht-Frontalaufprall |
| III | 1 | 0 | Sperrung alle Zündungen |
| IV | 1 | 1 | Freigabe alle Zündungen |

Wie ersichtlich, kann das bzw. können die Zündgeräte, die einen Frontalaufprall zugeordnet sind, geprüft werden und können das bzw. können die Zündgeräte, die nicht einem Frontalaufprall zugeordnet sind, unabhängig von den bei einem Frontalaufprall zu zündenden Zündgeräten gezündet werden. Bei dem Ausgang 40 handelt es sich bei der Ausführungsform gemäß Fig. 3 somit nicht um einen Testausgang im eigentlichen Sinne, sondern um einen zusätzlichen Steuerausgang, mit den Funktionen sperr- bzw. freigebbar sind.

Die Schaltung des bzw. der Zündgeräte ist entsprechend ausgeführt, so daß mit den in Tabelle 2 erläuterten Signalzuständen an deren Ausgängen 32₁ und 48₁ die entsprechenden Funktionen sperrbar bzw. freigebbar sind.

Es versteht sich, daß die beispielhaft beschriebenen Schaltungen in vielfältiger Weise abgeändert werden können, wenn nur die wesentlichen Erfindungsgedanken realisiert sind, d.h. das Erzeugen von Signalzuständen an der steuergeräteseitigen Kommunikationsschnittstelle 6, die über den Kommunikationsbus 8 zur Kommunikationsschnittstelle 12 übertragen werden und dort zum Sperren bzw. Freigeben von Funktionszuständen verfügbar sind, die mittels entsprechender Befehle ausgelöst werden. Ein Eingang der steuergeräteseitigen Kommunikationsschnittstelle ist mit einem Safing-Schalter verbunden, wobei der Safing-Schalter mittels eines von einem Ausgang des Steuergerätes ansteuerbaren Bypaß-Schalters umgehbar ist. Der Ausgang des Safing-Schalters ist mit einem Eingang des Steuergerätes verbunden, wobei im Unterschied zu den dargestellten Ausführungen dieser Eingang invertierend sein kann, d.h. bei geschlossenem Safing-Schalter mit Spannung Null beaufschlagt ist.

Ein ausgangsseitiges Zündgerät verfügt über eine Einrichtung, mit der eine Prüfung einer Zündeinheit bei einer vorbestimmten Signalbelegung der Ausgänge der zündgeräteseitigen Kommunikationsschnittstelle möglich ist, solange die Spannungsquelle noch nicht ihre Zündspannung erreicht hat, und in dem Zustand, in dem die Prüfbarkeit freigegeben ist, die Zündbarkeit selbstätig gesperrt wird, sobald die Spannungsquelle ihre Zündspannung erreicht hat.

Alternativ kann die Kommunikationsschnittstelle der Zündgeräte, wie in Fig. 2 ausgeführt, mit drei Ausgängen ausgeführt sein und die Signalbelegung der Eingänge 32 und 48 des Steuergerätes der Fig. 4, die über den Kommunikationsbus übertragen wird, durch entsprechende Ausbildung der Kommunikationsschnittstelle 12 in die folgende Signalbelegung umgesetzt werden:

| Zustand | K-Schnittstelle 6 (Fig. 4) | | K-Schnittstelle 12 (Fig. 2) | | |
|---|---|---|---|---|---|
| | 32 | 48 | 32₁ | 48₁ | 42₁ |
| I | 0 | 0 | 1 | 0 | 1 |
| II | 0 | 1 | 1 | 1 | 0 |
| III | 1 | 0 | 0 | 0 | 0 |
| IV | 1 | 1 | 0 | 1 | 0 |

Dadurch können mit der Ausbildung des Steuergerätes und der diesem nachgeordneten Schaltungen gemäß Fig. 1 und der Ausbildung des Zündgerätes gemäß Fig. 2 alle in Zusammenhang mit diesen Figuren erläuterten Funktionen ausgeführt werden.

Ober den Kommunikationsbus müssen nur zwei zusätzliche, in den Codewörtern enthaltene Bits gesendet werden, die je einem der Eingänge 32 und 48 entsprechen und deren Signalzustand wie in der vorstehenden Tabelle angegeben ist. Die in den (Steuer- bzw. Signal-)Bits enthaltenen Informationen werden in der Kommunikationsschnittstelle 12 in die in der Tabelle angegebene Signalbelegung der Ausgänge 32₁, 48₁ und 42₁ umgesetzt.

## Patentansprüche

1. System zum Steuern des Betriebs von Modulen mittels von einem Steuergerät über einen Datenbus erfolgender Informationsübertragung, insbesondere zum Steuern des Betriebs von Zündgeräten einer Insassenschutzvorrichtung in einem Kraftfahrzeug, enthaltend
eine mit dem Steuergerät (2) über eine Datenleitung (4) verbundene Kommunikationsschnittstelle (6) mit einem Eingang (32), welche Kommunikationsschnittstelle von dem Steuermodul gesendete Daten in über den Kommunikationsbus (8) gesendete Codewörter umwandelt, die Information über die Daten und den Signalzustand des Eingangs (32) enthalten,
**dadurch gekennzeichnet, daß**
die mit dem Steuergerät (2) verbundene Kommunikationsschnittstelle (6) mehrere mit Signalen belegbare Eingänge (32, 42, 48) aufweist, und
daß der Kommunikationsbus (8) mit den Modulen (9, 10) über eine modulseitige Kommunikationsschnittstelle (12) verbunden ist, die mehrere mit Signalen belegbare Ausgänge (32₁, 42₁, 48₁) aufweist, wobei der Signalzustand der Eingänge über den Kommunikationsbus (8) derart auf die Ausgänge übertragen wird, daß eine vorbestimmte Beziehung zwischen den Signalzuständen der Eingänge und Ausgänge besteht, wodurch Funktionen der Module (9, 10) mittels der Signalzustände der Eingänge sperrbar und freigebbar sind.

2. System nach Anspruch 1, **dadurch gekennzeichnet, daß**
die mit dem Steuergerät (2) verbundene Kommunikationsschnittstelle (6) einen mit einem Safing-Schalter (26) verbundenen Safing-Eingang (32) und
einen Steuereingang (48) aufweist, der mit einem mit einem Steuersignal beaufschlagbaren Steuerausgang (46) des Steuergerätes (2) verbunden ist, und
daß der Kommunikationsbus (8) mit den Modulen (9, 10) über eine modulseitige Kommunikationsschnittstelle (12) verbunden ist, die einen Safing-Ausgang (32₁) und einen Steuerausgang (48₁) aufweist, wobei der Signalzustand des Safing-Eingangs bzw. des Steuereingangs an dem Safing-Ausgang bzw. dem Steuerausgang zum Sperren oder Freigeben von Funktionen der Module (9, 10) verfügbar ist.

3. System nach Anspruch 1 oder 2, **dadurch gekennzeichnet, daß** die Module über einen Code gezielt ansprechbar sind.

4. System zum Steuern des Betriebs von Modulen mittels von einem Steuergerät über einen Datenbus erfolgender Informationsübertragung, insbesondere zum Steuern des Betriebs von Zündgeräten einer Insassenschutzvorrichtung in einem Kraftfahrzeug, enthaltend
eine mit dem Steuergerät (2) über eine Datenleitung (4) verbundene Kommunikationsschnittstelle (6) mit einem mit einem Safing-Schalter (26) verbundenen Safing-Eingang (32), welche Kommunikationsschnittstelle von dem Steuermodul gesendete Daten in über den Kommunikationsbus (8) gesendete Codewörter umwandelt, die Information über die Daten und den Signalzustand des Safing-Eingangs enthalten,
**dadurch gekennzeichnet, daß**
das Steuergerät (2) einen von ihm aus mit einem Testsignal beaufschlagbaren Testausgang (40) aufweist, der mit einem weiteren Eingang (42, 48) der Kommunikationsschnittstelle (6) verbunden ist, und
daß parallel zum Safing-Schalter (26) ein Bypaß-Schalter (34) derart vorgesehen ist, daß bei Vorhandensein des vom Steuergerät erzeugten Testsignals unabhängig vom Schaltzustand des Safing-Schalters am Safing-Eingang (32) ein dem geschlossenen Safing-Schalter entsprechender Signalzustand vorhanden ist,
und
daß der Kommunikationsbus (8) mit den Modulen (9, 10) über eine modulseitige Kommunikationsschnittstelle (12) verbunden ist, die einen Safing-Ausgang (32₁) und wenigstens einen weiteren Ausgang (42₁, 48₁) aufweist, wobei der Signalzustand des Safing-Eingangs bzw. des weiteren Eingangs an dem Safing-Ausgang bzw. weiteren Ausgang zum Sperren oder Freigeben von Funktionen der Module verfügbar ist.

5. System nach Anspruch 4, **dadurch gekennzeichnet,**
**daß** der Testausgang (40) des Steuergerätes (2) direkt mit einem Testeingang (42) der Kommunikationsschnittstelle (6) verbunden ist und der weitere Ausgang der modulseitigen Kommunikationsschnittstelle (12) durch einen Testausgang (42₁) gebildet ist.

6. System nach Anspruch 5 und einem der Ansprüche 1 bis 3 für ein Insassenschutzsystem eines Kraftfahrzeugs, **dadurch**
**gekennzeichnet,**
**daß** bei einem Frontalaufprall auszulösende Sicherheitseinrichtungen (18) nur bei geschlossenem Safing-Schalter (26) auslösbar sind und bei einem Seitenaufprall auszulösende Sicherheitseinrichtungen (20) auch bei offenem Safing-Schalter auslösbar sind.

7. System nach Anspruch 6, **dadurch gekennzeichnet, daß** bei Vorhandensein eines Testsignals die Auslösbarkeit der bei einem Frontalaufprall auszulösenden Sicherheitseinrichtungen (18) gesperrt ist.

8. System nach Anspruch 4, **dadurch gekennzeichnet,**
**daß** der Steuereingang (48) mit dem Testausgang (40) über eine Schalteinrichtung (74) derart verbunden ist, daß am Steuereingang bei Vorhandensein eines Testsignals ein dem Vorhandensein eines Steuersignals entsprechender Signalzustand vorhanden ist.

9. System nach Anspruch 8 für ein Insassenschutzsystem in einem Kraftfahrzeug, **gekennzeichnet durch** folgende Zuordnung zwischen den Signalzuständen an den Eingängen der steuergeräteseitigen Kommunikationsschnittstelle und Freigebbarkeit bzw. Sperrung von Funktionen:
| Zustand | Safing-Eingang 32 | Steuereingang 48 | Freigabe/Sperre |
|---|---|---|---|
| I | 0 | 0 | Freigabe Test Zündung bei Frontalaufprall |
| II | 0 | 1 | Freigabe Zündung bei Nicht-Frontalaufprall |
| III | 1 | 0 | Sperrung alle Zündungen |
| IV | 1 | 1 | Freigabe alle Zündungen |

10. System nach einem der Ansprüche 1 bis 9, **dadurch gekennzeichnet,**
**daß** die steuergeräteseitige Kommunikationsschnittstelle (6) den Signalzustand ihrer Eingänge an das Steuergerät (2) sendet.

11. Zündgerät zum Anschluß an den Kommunikationsbus eines Systems nach Anspruch 3 für eine Insassenschutzvorrichtung in
einem Kraftfahrzeug,
**gekennzeichnet durch**
die an den Kommunikationsbus (8) anschließbare Kommunikationsschnittstelle mit dem Safing-Ausgang (32₁), dem Steuerausgang (48₁), einem Codesignalausgang mit einem Zündsignalausgang,
eine Schalteinrichtung (50), die einen vom Safing-Ausgang (32₁) ansteuerbaren Safing-Schalter (61, einen von Steuerausgang (42₁) ansteuerbaren Steuerschalter (59), einen Codeeingang (54) mit einem Zündeingang aufweist, wobei ein am Codeeingang liegendes Zündgeräte-spezifisches Codesignal bestimmt, welcher der Schalter aktiviert ist und ein Zündsignal bei aktiviertem Safing-Schalter und Vorliegen eines Safing-Signals und/oder aktiviertem Steuerschalter und Vorliegen eines Steuersignals zu einer Zündung einer Zündeinheit führt, eine Sicherheitsschaltung (62) mit einem UND-Glied (64), dessen Eingänge mit dem Prüfausgang (42₁) und der Zündspannungsquelle (58) verbunden sind und dessen Ausgang mit einem Sicherheitschalter (66) verbunden ist, der den Safing-Ausgang mit Masse verbindet, wenn der Prüfausgang mit einem Prüfsignal beaufschlagt ist und die Zündspannungsquelle eine zur Zündung der Zündeinheit nicht ausreichende Spannung aufweist.

12. Zündgerät zum Anschluß an den Kommunikationsbus eines Systems nach Anspruch 5 für eine Insassenschutzvorrichtung in einem Kraftfahrzeug,
**gekennzeichnet durch**
die an den Kommunikationsbus (8) anschließbare Kommunikationsschnittstelle mit dem Safing-Ausgang (32₁), dem Testausgang,
einem vom Safing-Ausgang (32₁) ansteuerbaren Safing-Schalter (61), der bei einem Signal am Safing-Ausgang und Vorliegen eines Zündsignals eine Zündspannungsquelle (53) mit einer Zündeinheit (62) verbindet, und
eine Sicherheitsschaltung (63) mit einem UND-Glied (64), dessen Eingänge mit dem Testausgang (42₁) und der Zündspannungsquelle (58) verbunden sind und dessen Ausgang (32₁) mit einem Sicherheitschalter (66) verbunden ist, der den Safing-Ausgang mit Masse verbindet, wenn der Testausgang mit einem Testsignal beaufschlagt ist und die Zündspannungsquelle eine zur Zündung der Zündeinheit nicht ausreichende Spannung aufweist.

13. Zündgerät nach Anspruch 11, **dadurch gekennzeichnet, daß** eine Überwachungseinrichtung (68) für den Sicherheitschalter (66) vorgesehen ist.

## Claims

1. System for controlling the operation of modules by transmitting information from a control device via a databus, in particular for controlling the operation of firing devices of a vehicle occupant protection apparatus in a motor vehicle, containing
a communications interface (6) which is connected to the control device (2) via a data line (4) and has an input (32), which communications interface converts data transmitted by the control module into code words which are transmitted via the communications bus (8) and which contain information relating to the data and the signal state of the input (32),
**characterized in that**
the communications interface (6) which is connected to the control device (2) has a plurality of inputs (32, 42, 48) to which signals can be applied, and **in that** the communications bus (8) is connected to the modules (9, 10) via a module-end communications interface (12) which has a plurality of outputs (32₁, 42₁, 48₁) to which signals can be applied, the signal state of the inputs being transmitted to the outputs via the communications bus (8) in such a way that there is a predetermined relationship between the signal states of the inputs and outputs, as a result of which functions of the modules (9, 10) can be disabled and enabled by means of the signal states of the inputs.

2. System according to Claim 1, **characterized in that** the communications interface (6) which is connected to the control device (2) has a safing input (32) which is connected to a safing switch (26) and a control input (48) which is connected to a control output (46), to which a control signal can be applied, of the control device (2), and **in that** the communications bus (8) is connected to the modules (9, 10) via a module-end communications interface (12) which has a safing output (32₁) and a control output (48₁), the signal state of the safing input or of the control input being available at the safing output or the control output in order to disable or enable functions of the modules (9, 10).

3. System according to Claim 1 or 2, **characterized in that** the modules can be addressed selectively by means of a code.

4. System for controlling the operation of modules by transmitting information from a control device via a databus, in particular for controlling the operation of firing devices of a vehicle occupant protection apparatus in a motor vehicle, containing
a communications interface (6) which is connected to the control device (2) via a data line (4) and has a safing input (32) connected to a safing switch (26), which communications interface converts data transmitted by the control module into code words which are transmitted via the communications bus (8) and which contain information relating to the data and the signal state of the safing input,
**characterized in that**
the control device (2) has a test output (40) to which a test signal can be applied from said control device (2) and which is connected to a further input (42, 48) of the communications interface (6), and **in that** a bypass switch (34) is provided parallel to the safing switch (26) in such a way that when the test signal generated by the control device is present a signal state corresponding to the closed safing switch is present at the safing input (32) irrespective of the switch state of the safing switch, and **in that** the communications bus (8) is connected to the modules (9, 10) via a module-end communications interface (12) which has a safing output (32₁) and at least one further output (42₁, 48₁), the signal state of the safing input or of the further input being available at the safing output or further output in order to disable or enable functions of the modules.

5. System according to Claim 4, **characterized in that** the test output (40) of the control device (2) is directly connected to a test input (42) of the communications interface (6), and the further output of the module-end communications interface (12) is formed by a test output (42₁).

6. System according to Claim 5 and one of Claims 1 to 3 for a vehicle occupant protection system of a motor vehicle, **characterized in that** safety devices (18) which trigger when there is a front-end impact can be triggered only when the safing switch (26) is closed and safety devices (20) which trigger when there is a side impact can also trigger when the safing switch is open.

7. System according to Claim 6, **characterized in that** when a test signal is present the triggering capability of the safety devices (18) which trigger when there is a front-end impact is disabled.

8. System according to Claim 4, **characterized in that** the control input (48) is connected to the test output (40) via a switching device (74) in such a way that when there is a test signal present a signal state which corresponds to the presence of a control signal is present at the control input.

9. System according to Claim 8 for a vehicle occupant protection system in a motor vehicle, **characterized by** the following relationship between the signal states at the inputs of the control-device-end communications interface and the possibility of enabling or disabling functions:
| State | Safing input 32 | Control input 48 | Enabling/disabling |
|---|---|---|---|
| I | 0 | 0 | Enabling test Firing in case of front-end impact |
| II | 0 | 1 | Enabling firing in case of non-front-end impact |
| III | 1 | 0 | Disabling of all firings |
| IV | 1 | 1 | Enabling of all firings |

10. System according to one of Claims 1 to 9, **characterized in that** the control-device-end communications interface (6) transmits the signal state of its inputs to the control device (2).

11. Firing device for connection to the communications bus of a system according to Claim 3 for a vehicle occupant protection apparatus in a motor vehicle, **characterized by** the communications interface which can be connected to the communications bus (8) and has a safing output (32₁), the control output (48₁), a code signal output with a firing signal output, a switching device (50) which has a safing switch (61) which can be activated by the safing output (32₁), a control switch (59) which can be activated by control output (42₁), a code input (54) with a firing input, a firing-device-specific code signal present at the coding input determining which of the switches is activated, and a firing signal leading to firing of a firing unit when the safing switch is activated and a safing signal is present and/or control switch is activated and/or a control signal is present, a safety circuit (62) with an AND element (64) whose inputs are connected to the test output (42₁) and to the firing voltage source (58) and whose output is connected to a safety switch (66) which connects the safing output to earth if a test signal is applied to the test output and the firing voltage source has a voltage which is not sufficient to fire the firing unit.

12. Firing device for connection to the communications bus of a system according to Claim 5 for a vehicle occupant protection device in a motor vehicle, **characterized by** the communications interface which can be connected to the communications bus (8) and has the safing output (32₁), the test output, a safing switch (61) which can be activated by the safing output (32₁) and which connects a firing voltage source (53) to a firing unit (62) when there is a signal at the safing output and a firing signal is present, and a safety circuit (63) with an AND element (64) whose inputs are connected to the test output (42₁) and to the firing voltage source (58) and whose output (32₁) is connected to a safety switch (66) which connects the safing output to earth if a test signal is applied to the test output and the firing voltage source has a voltage which is not sufficient to fire the firing unit.

13. Firing device according to Claim 11, **characterized in that** a monitoring device (68) for the safety switch (66) is provided.

## Revendications

1. Système pour commander le fonctionnement de modules à l'aide d'une transmission d'informations effectuée par un appareil de commande par l'intermédiaire d'un bus de données, notamment pour la commande du fonctionnement d'appareils d'amorçage d'un dispositif de protection des occupants d'un véhicule automobile, contenant
une interface de communication (6) reliée à un appareil de commande (2) par l'intermédiaire d'une ligne de données (4), avec une entrée (32), cette interface de communication transformant des données transmises par le module de commande en mots de code envoyés par le bus de communication (8), qui contiennent une information sur les données et sur l'état des signaux sur l'entrée (32),
**caractérisé en ce que**
l'interface de communication (6) reliée à l'appareil de commande (2) présente plusieurs entrées (32, 42, 48) sur lesquelles des signaux peuvent être appliqués et
le bus de communication (8) est relié aux modules (9, 10), par l'intermédiaire d'une interface de communication (12) située côté modules, qui présente plusieurs sorties (32₁, 42₁, 48₁) sur lesquelles des signaux peuvent être appliqués, l'état des signaux sur les entrées étant transmis aux sorties par le bus de communication (8), de façon à ce qu'une relation prédéfinie soit donnée entre les états des signaux sur les entrées et sur les sorties, par laquelle des fonctions des modules (9, 10) peuvent être bloquées ou débloquées à l'aide des états des signaux sur les entrées,.

2. Système selon la revendication 1, **caractérisé en ce que** l'interface de communication (6) reliée à l'appareil de commande (2) présente une entrée de sécurité (32) qui est reliée à un commutateur de sécurité (26) et
d'une entrée de commande (48) qui est reliée à une sortie de commande (46) de l'appareil de commande (2), sur laquelle des signaux de commandes peuvent être appliqués et
**en ce que** le bus de communication (8) est relié aux modules (9, 10) par l'intermédiaire d'une interface de communication (12), située côté modules et qui présente une sortie de sécurité (32) et une sortie de commande (48₁), l'état des signaux sur l'entrée de sécurité resp. sur l'entrée de commande étant disponible sur la sortie de sécurité ou sur la sortie de commande, pour le blocage ou pour le déblocage de fonctions des modules (9, 10).

3. Système selon l'une quelconque des revendications 1 ou 2, **caractérisé en ce que** les modules peuvent être adressés de façon ciblée à l'aide d'un code.

4. Système pour commander le fonctionnement de modules à l'aide d'une transmission d'informations effectuée par un appareil de commande par l'intermédiaire d'un bus de données, notamment pour la commande du fonctionnement d'appareils d'amorçage d'un dispositif de protection des occupants d'un véhicule automobile, contenant
une interface de communication (6) reliée à un appareil de commande (2) par l'intermédiaire d'une ligne de données (4), avec une entrée de sécurité (32) reliée à un commutateur de sécurité (26), cette interface de communication transformant des données transmises par le module de commande en mots de code envoyés par le bus de communication (8), qui contiennent une information sur les données et l'état des signaux à l'entrée de sécurité (32),
**caractérisé en ce que**
l'appareil de commande (2) présente une sortie de test (40), sur laquelle peut être appliqué un signal de test qu'il émet et qui est reliée à une entrée supplémentaire (42, 48) de l'interface de communication (6) et
un commutateur de dérivation (34) est prévu en parallèle du commutateur de sécurité (26), de façon à ce qu'en présence du signal de test généré par l'appareil de commande, indépendamment de l'état de commutation du commutateur de sécurité un état de signaux correspondant au commutateur de sécurité fermé soit donné sur l'entrée de sécurité (32) et
le bus de communication (8) est relié aux modules (9, 10), par l'intermédiaire d'une interface de communication (12) située côté modules, qui présente une sortie de sécurité (32₁) et au moins une sortie supplémentaire (42₁, 48₁), l'état des signaux sur l'entrée de sécurité resp. sur l'entrée supplémentaire étant disponible à la sortie de sécurité ou à la sortie supplémentaire pour le blocage ou pour le déblocage de fonctions des modules.

5. Système selon la revendication 4, **caractérisé en ce que**
la sortie de test (40) de l'appareil de commande (2) est directement reliée à une entrée de test (42) de l'interface de communication (6) et la sortie supplémentaire de l'interface de communication (12) située côté modules est formée par une sortie de test (42₁).

6. Système selon la revendication 5 et l'une quelconque des revendications 1 à 3 pour un système de protection des occupants d'un véhicule automobile,
**caractérisé en ce que**
des dispositifs de sécurité (18) devant être déclenchés lors d'un choc frontal ne peuvent être déclenchés que si le commutateur de sécurité (26) est fermé et des dispositifs de sécurité (20) devant être déclenchés lors d'un choc latéral peuvent également être déclenchés si le commutateur de sécurité est ouvert.

7. Système selon la revendication 6, **caractérise en ce qu'**en présence d'un signal de test, la capacité de déclenchement des dispositifs de sécurité (18) devant être déclenchés est bloquée en cas de choc frontal.

8. Système selon la revendication 4, **caractérisé en ce que**
l'entrée de commande (48) est reliée à la sortie de test (40) par l'intermédiaire d'un dispositif de commutation (74), de façon à ce qu'en présence d'un signal de test, un état de signaux correspondant à la présence d'un signal de test soit présent à l'entrée de commande.

9. Système selon la revendication 8 pour un système de protection des occupants d'un véhicule automobile, **caractérisé par** l'association suivante entre les états des signaux sur les entrées de l'interface de communication située côté appareil de commande et la capacité de déblocage resp. de blocage des fonctions :
| Etat | Entrée de sécurité 32 | Entrée de commande 48 | Déblocage/blocage |
|---|---|---|---|
| I | 0 | 0 | Déblocage test Amorçage en cas de choc frontal |
| II | 0 | I | Déblocage Amorçage en cas de choc non frontal |
| III | 1 | 0 | Blocage de tous les amorçages |
| IV | 1 | 1 | Déblocage de tous les amorçages. |

10. Système selon l'une quelconque des revendications 1 à 9, **caractérisé en ce que**
l'interface de communication (6) située côté appareil de commande envoie l'état des signaux de ses entrées à l'appareil de commande (2).

11. Appareil d'amorçage destiné à être raccordé sur le bus de communication d'un système selon la revendication 3 pour un dispositif de protection des occupants d'un véhicule automobile,
**caractérisé par**
l'interface de communication pouvant être reliée au bus de communication (8) avec la sortie de sécurité (32₁), la sortie de commande (48₁), une sortie de signal de code avec une sortie de signal d'amorçage,
un dispositif de commutation (50), présentant un commutateur de sécurité (61), activable par la sortie de sécurité (32₁), un commutateur de commande (59), activable par la sortie de commande (42₁), une entrée de code (54) avec une entrée d'amorçage, un signal de code spécifique à l'appareil d'amorçage appliqué à l'entrée de code déterminant lequel des commutateurs est activé et un signal d'amorçage amorçant une unité d'amorçage si le commutateur de sécurité est activé et en présence d'un signal de sécurité et/ou si le commutateur de commande est activé et en présence d'un signal de commande, un circuit de sécurité (62) avec un organe ET (64), dont les entrées sont reliées à la sortie de contrôle (42₁) et à la source de tension d'amorçage (58) et dont la sortie est reliée à un commutateur de sécurité (66) reliant la sortie de sécurité à la masse si un signal de contrôle est appliqué à la sortie de contrôle et si la source de tension d'amorçage ne dispose pas d'une tension suffisante pour faire amorcer l'unité d'amorçage.

12. Appareil d'amorçage destiné à être raccordé sur le bus de communication d'un système selon la revendication 5 pour un dispositif de protection des occupants d'un véhicule automobile,
**caractérisé par**
l'interface de communication pouvant être reliée au bus de communication, (8), avec la sortie de sécurité (32₁), la sortie de test,
un commutateur de sécurité (61), activable par une sortie de sécurité (32₁), qui si un signal est appliqué à la sortie de sécurité et en présence d'un signal d'amorçage relie une source de tension d'amorçage (53) avec une unité d'amorçage et
un circuit de sécurité (63) avec un organe ET (64), dont les entrées sont reliées à la sortie de test (42₁) et avec la source de tension d'amorçage (58) et dont la sortie (32₁) est reliée à un commutateur de sécurité (66) reliant la sortie de sécurité à la masse si un signal de test est appliqué à la sortie de test et si la source de tension d'amorçage ne dispose pas d'une tension suffisante pour faire amorcer l'unité d'amorçage.

13. Appareil d'amorçage selon la revendication 11, **caractérisé en ce qu'**un dispositif de surveillance (68) est prévu pour le commutateur de sécurité (66).
